(19) Europäisches Patentamt
European Patent Office
Office européen des brevets

(11) **EP 3 499 270 B1**

(12) **EUROPEAN PATENT SPECIFICATION**

(45) Date of publication and mention
of the grant of the patent:
**16.11.2022 Bulletin 2022/46**

(21) Application number: **17206980.9**

(22) Date of filing: **13.12.2017**

(51) International Patent Classification (IPC):
*G01S 19/34* (2010.01)    *G01S 19/23* (2010.01)
*G01S 19/25* (2010.01)    *G01S 19/37* (2010.01)
*G01S 19/24* (2010.01)

(52) Cooperative Patent Classification (CPC):
**G01S 19/34; G01S 19/37;** G01S 19/243

(54) **USE OF A DYNAMIC SIGNAL QUALITY INDICATOR MODEL FOR BATTERY SAVING**

VERWENDUNG EINES DYNAMISCHEN SIGNALQUALITÄTSINDIKATORMODELLS ZUM
BATTERIESPAREN

UTILISATION D'UN MODÈLE D'INDICATEUR DE QUALITÉ DE SIGNAL DYNAMIQUE DE
PRÉSERVATION DE BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.06.2019 Bulletin 2019/25**

(73) Proprietor: **Airbus Defence and Space GmbH
82024 Taufkirchen (DE)**

(72) Inventors:
• **Bey, Thomas
81737 München (DE)**
• **Soualle, Francis
81543 München (DE)**

(74) Representative: **Frenkel, Matthias Alexander
Wuesthoff & Wuesthoff
Patentanwälte PartG mbB
Schweigerstraße 2
81541 München (DE)**

(56) References cited:
**EP-A1- 1 548 456    EP-A1- 2 244 097
EP-A2- 3 220 165    WO-A1-2013/093564
CN-A- 101 493 512    GB-A- 2 453 974**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Examples relate to concepts for performing range measurements and applications thereof and in particular to a user device and a method for performing range measurements.

EP 3 220 165 A2 discloses an apparatus which computes first locations of a satellite for several points in time based on a first set of parameters values broadcast by the satellite for a first validity period and second locations of the satellite for these points in time based on a second set of parameter values with associated second validity period. The first or second validity period is extended by an equation of motion, which includes forces acting on the satellite. The apparatus computes a value of an error component for points in time by comparing first with second locations and fits parameter values of a model to the values of the error component to obtain a model of a time-evolution of values of the error component. The apparatus provides the model of the time-evolution as a basis for a correction of locations of the satellite that are computed based on the first set of parameter values.

User devices may have to be optimized with respect to battery saving. Nevertheless, it is desired to form user devices with reduced processing effort.

There may be a demand to provide concepts for methods and user devices with reduced power consumption.

Such a demand may be satisfied by the subject-matter of the claims.

The present invention is defined by the independent claims. Specific embodiments are defined by the dependent claims.

It is clear to a person skilled in the art that the statements set forth herein under use of hardware circuits, software means, or a combination thereof may be implemented. The software means can be related to programmed microprocessors or a general computer, an ASIC (Application Specific Integrated Circuit) and/or DSPs (Digital Signal Processors). For example, the receiving unit, the processing unit or a memory unit of the user device may be implemented partially as a computer, a logical circuit, an FPGA (Field Programmable Gate Array), a processor (for example, a microprocessor, microcontroller ($\mu$C) or an array processor)/a core/a CPU (Central Processing unit), an FPU (Floating Point Unit), NPU (Numeric Processing unit), an ALU (Arithmetic Logical Unit), a Coprocessor (further microprocessor for supporting a main processor (CPU)), a GPGPU (General Purpose Computation on Graphics Processing unit), a multi-core processor (for parallel computing, such as simultaneously performing arithmetic operations on multiple main processor(s) and/or graphical processor(s)) or a DSP. It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefor, methods like swapping and paging can be deployed.

Even if some of the aspects described above have been described in reference to the method, these aspects may also apply to the user device. Likewise, the aspects described above in relation to the user device may be applicable in a corresponding manner to the method.

In the following, the preferred embodiments of the present disclosure will be described with reference to the accompanying drawings; the same components are always provided with the same reference symbols.

Other objects, features, advantages and applications will become apparent from the following description of non-limiting embodiments regarding the accompanying drawings. In the drawings, all described and/or illustrated features, alone or in any combination form the subject matter disclosed therein, irrespective of their grouping in the claims or their relations/references. The dimensions and proportions of components or parts shown in the figures are not necessarily to scale; these dimensions and proportions may differ from illustrations in the figures and implemented embodiments.

Figure 1    schematically illustrates a user device for performing range measurements;
Figure 2    schematically illustrates a method for performing range measurements;
Figure 3    schematically illustrates the geometric dilution of precision;
Figure 4    schematically illustrates a prediction error over age of data;
Figure 5    schematically illustrates a contribution of the atmosphere and local effects on a ranging error;
Figure 6    schematically illustrates a first and a second validity period;
Figure 7    schematically illustrates an actual prediction error in the first validity error; and
Figure 8    schematically illustrates different contributions on to the pseudo ranges for one line of sight (LOS).

Unless otherwise defined, all terms (including technical and scientific terms) are used herein in their ordinary meaning of the art to which the examples belong.

The user device and method for performing range measurements will now be described with respect to the embodiments.

In the following, without being restricted thereto, specific details are set forth to provide a thorough understanding of the present disclosure. However, it is clear to the skilled person that the present disclosure may be used in other embodiments, which may differ from the details set out below.

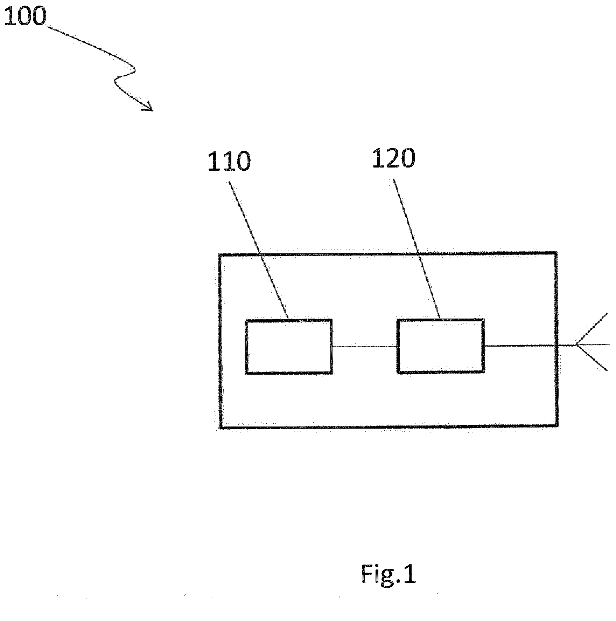

Figure 1 schematically illustrates a user device for performing range measurements. The UD comprises a receiving unit 120 and a processing unit 110. The receiving unit 120 is adapted to (continuously) receive a plurality of signals from (respective ones of) a plurality of navigation satellites. Each of the plurality of signals comprises a (same) (first) navigation message during a first validity period. The processing unit 110 is adapted to process the navigation message in the first validity period. The processing unit 110 is adapted to perform ranging measurements in a second validity period based on the plurality of signals and the processed navigation message in the first validity period. The second validity period is different from the first validity period.

The receiving unit 120 is adapted to receive the plurality of signals from the plurality of navigation satellites during the second validity period. The processing unit 110 is adapted to perform ranging measurements in the second validity period based on the plurality of signals received during the second validity period. The processing unit 110 is adapted to perform ranging measurements in the second validity period based on the processed navigation message of the first validity period.

For example, the navigation satellites may be part of a global navigation satellite system, GNSS, or radio navigation satellite system.

The navigation message comprises a time dynamic signal quality indicator (SQI). The processing unit 110 is adapted to determine a dimension of the second validity period based on the time dynamic SQI. The processing unit 110 is adapted to determine the dimension of the second validity period based on a predetermined ranging accuracy of the UD.

The time dynamic SQI is an indicator for overbounding the ranging error. The time dynamic SQI being valid for the first validity period is different from the time dynamic SQI being valid for the second validity period.

For example, the time dynamic SQI being valid for the first validity period may be used for performing ranging measurements during the second validity period.

For example, the processing unit 110 may be adapted to determine the dimension of the second validity time by setting a maximum ranging error.

The plurality of signals comprise at least one (second) navigation message during the second validity period. The processing unit 110 may be adapted to ignore the at least one (second) navigation message during the second validity period.

For example, the second validity period may be an extended validity time of the first validity period.

For example, the processing unit 110 may be adapted to process the (first) navigation message in the first validity period only (once). The second validity period follows the first validity period.

For example, a first part of the processing unit 110 may be adapted to process the navigation message. A second part of the processing unit 110 may be adapted to perform the ranging measurements. The first and second parts of the processing unit 110 may work self-sufficient.

The first part of the processing unit 110 may be not in use while the ranging measurement is performed by the second part of the processing unit 110.

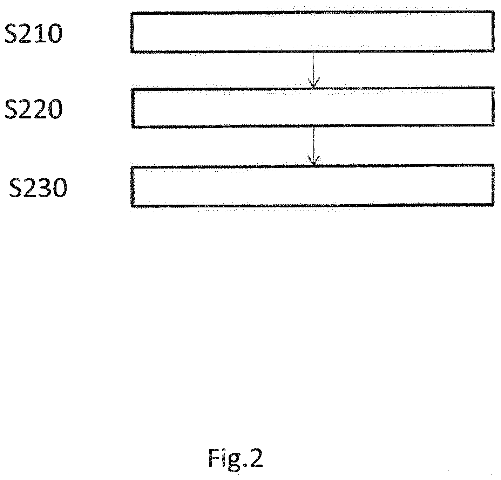

More details and aspects are mentioned in connection with the embodiments described above or below. The embodiment shown in Fig. 1 may comprise one or more optional additional features corresponding to one or more aspects mentioned in connection with the proposed concept or one or more embodiments described below (e.g. Fig. 2 - 8). The embodiments described below do not form part of the invention as claimed but are useful for understanding the invention.

Figure 2 schematically illustrates a method for performing range measurements. The method comprises (continuously) receiving S210, by a receiving unit 120 of the UD, a plurality of signals from (respective ones of) a plurality of navigation satellites. Each of the plurality of signals comprises a (same) (first) navigation message during a first validity period. The method comprises processing S220, by a processing unit 110, the navigation message in the first validity period. The method comprises performing S230, by the processing unit 110, ranging measurements in a second validity period based on the plurality of signals. The method comprises performing S230, by the processing unit 110, ranging measurements in a second validity period based on the processed navigation message in the first validity period. The second validity period is different from the first validity period.

For example, the first validity period may be smaller than 1 hour (or 0,5 hours, or 0,1 hours or 5 minutes). The second validity period may be smaller than 2 hours (or 1 hour, or 0,5 hours or 0,1 hours or 5 minutes). The first validity period may be larger than 5 minutes (or 10 minutes or 20 minutes or 30 minutes). The second validity period may be larger than 5 minutes (or 10 minutes or 20 minutes or 30 minutes or 40 minutes or 50 minutes or 60 minutes).

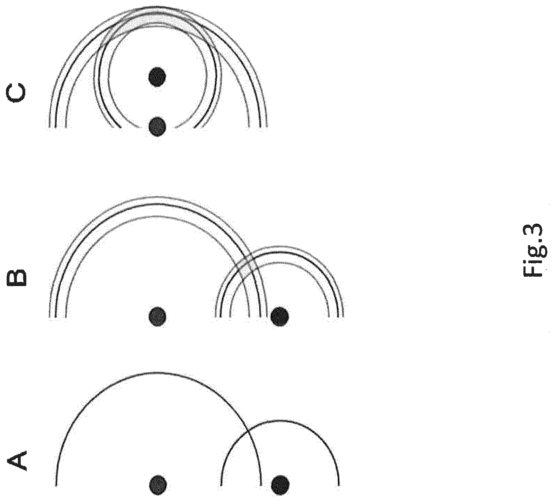

More details and aspects are mentioned in connection with the embodiments described above or below. The embodiment shown in Fig. 2 may comprise one or more optional additional features corresponding to one or more aspects mentioned in connection with the proposed concept or one or more embodiments described above (e.g. Fig. 1) or below (e.g. Fig. 3 - 8).

Figure 3 schematically illustrates the geometric dilution of precision. Dynamic Signal Quality Indicator can be used as a constant Signal Quality Indicator (i.e. URA for GPS and SISA for Galileo). Such dynamic SQI may be used for example in the Galileo Second Generation system. By use of the dynamic signal quality indicator in any navigation system (GNSS, 5G), a user device can be apt to use the dynamic signal quality indicator for user specific purposes. For example, mass-market chipsets within smartphones, to reduce their power consumption.

A user device (e.g. smartphones) may be prone to high battery drain using Radio Navigation Satellite System (RNSS) or Global Navigation Satellite Systems (GNSS). In a generic Position, Navigation and Timing (PNT) system, the user device determines its position based the triangulation process based on radio-frequency signals transmitted by Ranging Sources (RS). Firstly, the user device measures the distance between itself and each of those sources (ranging measurements), and secondly it intersects the spheres with centres located at those RS, and radius equal to the measured distances. RS positions are estimated through message parameters transmitted within the signal. This method is used by Radio Navigation Satellite Systems (RNSS), and especially Global Navigation Systems (GNSS) such as the GPS and Galileo.

The positioning performances obtained with the triangulation methodology depend on two main factors:

1. The number and the geometrical configuration w.r.t. the user device of the different RS (Dilution of Precision (DOP)
2. The error in the ranging measurement, including an error between the exact position of the RS and the RS position effectively received by the user device. The RS position error will indeed directly propagate into the user device position error.

The Geometric Dilution of Precision (GDOP) is illustrated in figure 3 by an example.

In case A, ranging measurements have no error (ideal case), the user device determines its position as the intersection of the two circles with the measured radius.

In case B, the ranging measurements have some error bounds, and the user device true location will lie somewhere in the grey area.

In case C, the ranging error is the same than B, but the error on their position has grown considerably due to the worse geometrical configuration.

The ranging performance budgets of GNSS may be derived with the prediction error for the satellite clock and orbit parameters. A single constant parameter, called User Ranging Accuracy (URA) for GPS and Signal-In-Space-Accuracy (SISA) for Galileo, is currently used. In the following, these prediction error parameters may be called Signal Quality Indicator (SQI).

The main purpose of SQI is to overbound the ranging error due to the system and is linked to a nominal validity period (typically 1 hour). Due to the demand of high accuracy services and support to Safety-of-life (EGNOS/ARAIM) applications, the validity time may even be reduced to a few minutes (1 minute, 5 minutes, 10 minutes or 15 minutes). However, reducing the validity time will force the user device to refresh/read the navigation message more often. Indeed, with the current constant (over time) SQI, user devices can't know the evolution of ranging errors beyond the nominal validity period and they must refresh/read the navigation message at the end of the nominal validity time.

With frequent refresh rate of the navigation message, the user device must each time read symbols, decode the information bits (e.g. Viterbi, Turbo code decoding), and finally read the satellite clock and orbit parameters, as well as the SQI. This processing chain requires CPU load within the user device and therefore highly impacts the battery life. This disadvantage may be overcome by the present disclosure.

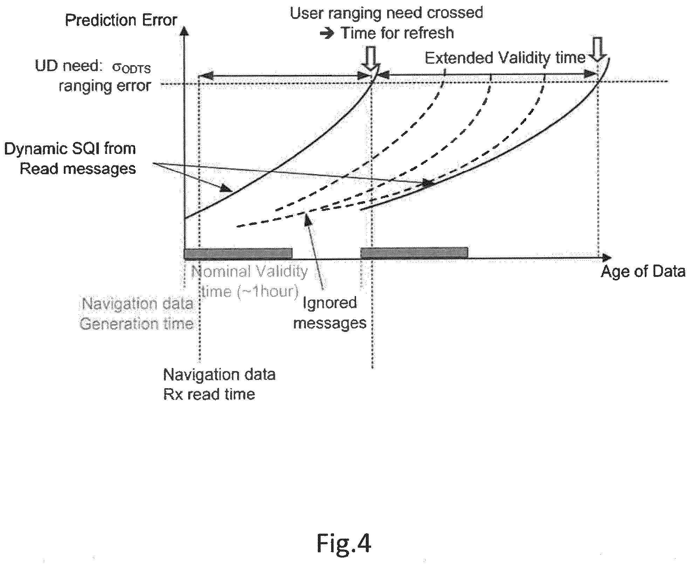

More details and aspects are mentioned in connection with the embodiments described above or below. The embodiment shown in Fig. 3 may comprise one or more optional additional features corresponding to one or more aspects mentioned in connection with the proposed concept or one or more embodiments described above (e.g. Fig. 1 - 2) or below (e.g. Fig. 4 - 8).

Figure 4 schematically illustrates a prediction error over age of data. A dynamic (i.e. time-dependent) model for the SQI is going to be disseminated in Galileo second generation to reduce the over-bounding margin. While the dynamic SQI is foreseen to optimise the system performance, not all receivers are interested to get a very precise PNT solution and may allow degradation in the pseudo range correction parameters (e.g. mass-market receivers, smartphones). When speaking from a receiver, it may also be referred to a user device herein.

As such it is proposed to use the dynamic SQI to extend the usability period of navigation parameters. Receivers not interested by Safety-of-life applications and/or high accuracy PNT can use the knowledge of SQI evolution with time to optimise the needed refresh/read rate of the navigation message with their own needed performances.

Based on its PNT solution accuracy need, a user device can determine the ranging error $\cdot_{ODTS}$ it can tolerate. This maximum ranging error can be set to a constant based on a typical or worst case geometrical configuration (worst case DOP) or be dynamically determined by the current DOP w.r.t. user device of the visible RS.

Depending on user device specific applications, several DOPs can be used, i.e.:

- HDOP - horizontal dilution of precision;
- VDOP - vertical dilution of precision;
- PDOP - position (3D) dilution of precision; and
- TDOP - time dilution of precision.

Thanks to the "time dynamic" SQI, the user device can determine at which point in time the ranging error will degrade sufficiently to exceed its own ranging quality needs and therefore at which point in time user device need to refresh/read the navigation message again. In the meantime, the user device can completely ignore message updates transmitted by the RS and therefore stop all message decoding processes, i.e. symbol reading and synchronisation, Viterbi / Turbo-code decoding.

The process is exemplary illustrated in figure 4 where solid curves show the read messages by the user device and the corresponding SQI evolution over time. The dashed curves are messages transmitted by RS but ignored by the user device:

During the time period when messages are ignored (between navigation message read time and end of extended validity time), the receiver processing can be reduced to ranging measurements only and the power consumption is reduced. The battery drain (major concern for smartphones) will be slowed down.

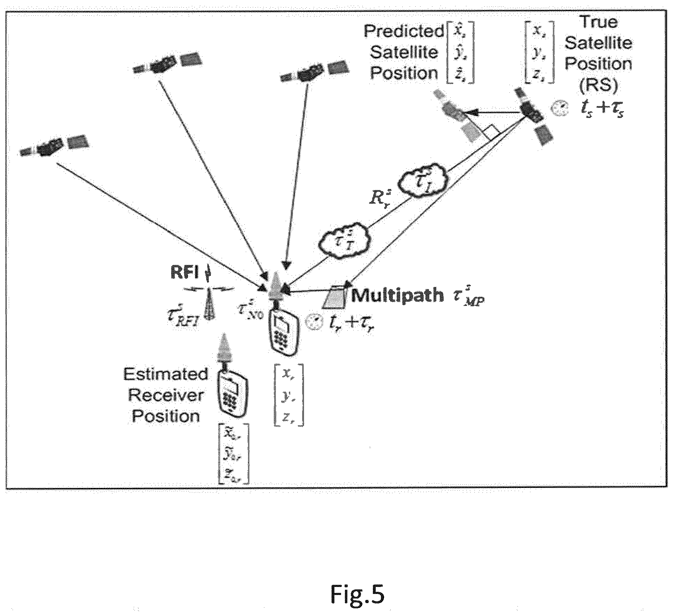

More details and aspects are mentioned in connection with the embodiments described above or below. The embodiment shown in Fig. 4 may comprise one or more optional additional features corresponding to one or more aspects mentioned in connection with the proposed concept or one or more embodiments described above (e.g. Fig. 1 - 3) or below (e.g. Fig. 5 - 8).

Figure 5 schematically illustrates a contribution of the atmosphere and local effects on a ranging error. In a generic PNT system, the general triangulation process used by a user device (user device) to determine its position based on radio-frequency signals transmitted by Ranging Sources (RS), consists firstly in measuring the distance between the user device and each of those sources, and secondly in intersecting the spheres with centres located at those RS, and radius equal to the measured distances. This very general method is for example typically used by Radio Navigation Satellite System (RNSS), and especially Global Navigation Systems (GNSS) such as the GPS and the Galileo ones.

Ignoring in a first stage the local effects at user device (such as the contribution of multipath, thermal noise or interferences), the positioning performances obtained with this triangulation methodology depend on two main factors: The number and the geometrical configuration w.r.t. the user device of the RS, and the error between the true, exact position of the RS and the position effectively applied by the user device in the position equation. The RS positioning error will indeed directly propagate into the user device position error.

In RNSS and GNSS the estimated position of the RS, i.e. the satellite, is modulated onto the ranging signal. Current designs do not offer the possibility to instantaneously estimate and disseminate the actual satellite position. Furthermore, bandwidth limitation also hinders the capability to periodically disseminate such instantaneous RS positions. Therefore, typical RNSS and GNSS derive a prediction model valid over a so-called validity period, from the estimated satellite orbits. The corresponding model generally requires a much-reduced number of binary symbols (bits) over the corresponding validity period when compared to aforementioned method providing RS position at a higher rate. The main drawback of this method is that the quality of the proposed prediction mode, i.e. the prediction error between the actual RS position and the one used in the user equation, typical degrades over the validity period.

Because RNSS and GNSS are passive positioning systems, in the sense that the measured distance between the user device and RS is based on the propagation time between the transmission source, i.e. the satellite and the reception device, the drift of the timing system, (i.e. clock) used for the generation of the ranging signals, over the validity period, may also play a key role. Therefore, RNSS and GNSS also provide prediction models for the clocks which are used to capture the deterministic part of the drift over the validity period.

Beside the satellite orbit and clocks, prediction models for other parameters impacting the estimation of the range between user device and RS are also modulated onto the ranging signals and broadcasted to the user device. Such contributions to the ranging error estimation are for example atmospheric prediction models, but can also be prediction models aiming at correcting the biases affecting the ranging measurement, and typically caused by the Hardware characteristics of the transmission chain.

The number, quality and types of models usually depend on the targeted positioning performances of the RNSS and GNSS system. Now all of those models have in common than their quality (i.e. their ability to capture the physical phenomenon) degrades with time. This is the reason why a higher refresh rate of such models is highly recommended to improve positioning performances of user device. Furthermore, if one identifies the difference between the estimated position of the satellite and its true position with a Position Vector, it appears that depending onto the type of parameters the corresponding position vector is not isotopically distributed but shows rather some preferred directions. As an example, clock prediction errors are typically radial (i.e. the vector is collinear to vector joining the satellite and the user device), while orbit prediction errors can be modelled with a vector which has radial, along and across track components, when expressed in the satellite referential and which are usually different.

In particular, figure 5 represents:

- The "true position" of the GNSS Satellite as Ranging Source (RS)
- The predicted position of the GNSS Satellite based on the prediction models included within the user message
- The Vector, V, between the true and predicted position of the GNSS
- Other GNSS satellites whose Line-of-Sight will be used for the determination of the User Device Position (the corresponding Vectors for the prediction Errors are not represented).
- The "true" receiver and estimated positions of the User Device (user device)

- This figure also depicts the contribution from the atmosphere (including the ionospherically ( $\tau_I^s$ ) and tropospheric ( $\tau_T^s$ ) delays), and local contribution (Multipath and noise) onto the ranging error. The "true" distance between satellite and User Device is called $R_r^s$ .

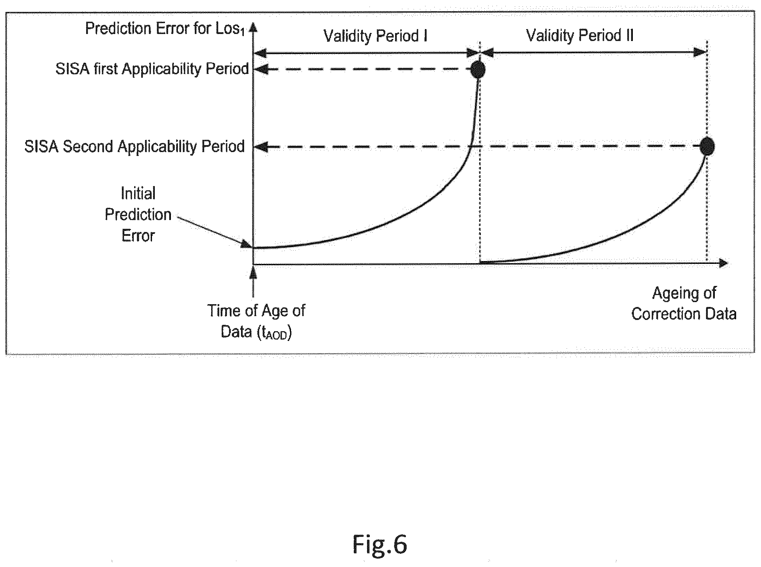

More details and aspects are mentioned in connection with the embodiments described above or below. The embodiment shown in Fig. 5 may comprise one or more optional additional features corresponding to one or more aspects mentioned in connection with the proposed concept or one or more embodiments described above (e.g. Fig. 1 - 4) or below (e.g. Fig. 6 - 8).

Figure 6 schematically illustrates a first and a second validity period. Figure 6 represents the variations of prediction error over time, over two successive validity periods, for the same satellite. At the end of the first validity period, the corresponding prediction error usually increases steeply, which hinders the use of the corresponding set of data for a period exceeding the validity period. The receiver has to apply another set of data for the following period of time (also depicted on the figure).

The Signal-In Space-Accuracy, SISA for Galileo, or the User-Ranging-Accuracy, URA for GPS, is the value of this combined prediction error taken at the end of the validity period (worst case). Because the conditions used to estimate the satellite clock, orbit, and atmosphere differ for successive estimation epochs, the derived prediction models, "profiles" will also differ from one validity period to the other and the SISA/URA will also differ, as depicted on figure 6.

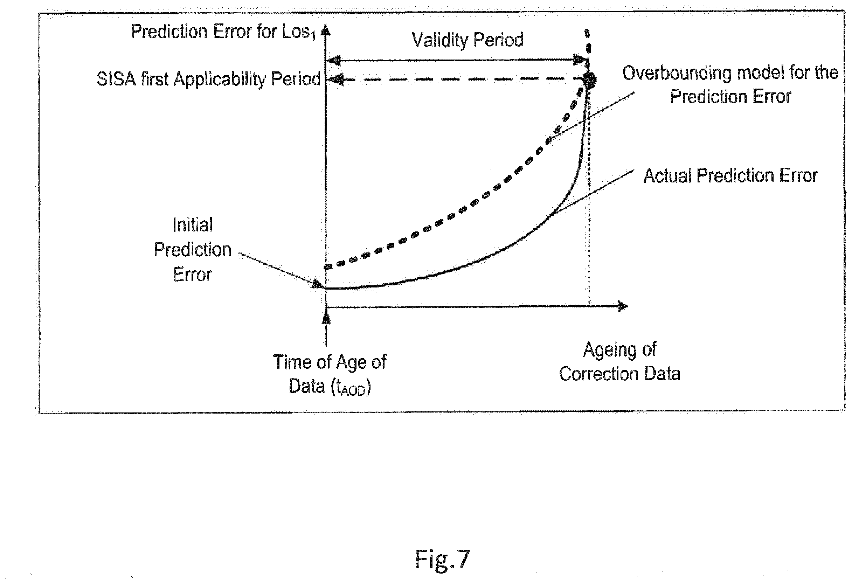

More details and aspects are mentioned in connection with the embodiments described above or below. The embodiment shown in Fig. 6 may comprise one or more optional additional features corresponding to one or more aspects mentioned in connection with the proposed concept or one or more embodiments described above (e.g. Fig. 1 - 5) or below (e.g. Fig. 7 - 8).

Figure 7 schematically illustrates an actual prediction error in the first validity error. Figure 7 represents the actual prediction error computed for the first validity period, together with a dynamic model which overbounds the prediction error. It can be verified that the prediction model (depicted with dashed lines) is always larger or equal than the actual prediction error (depicted with plane lines). Here a simple model, such as a quadratic polynomial could be proposed when overbounding the prediction error used for accuracy applications.

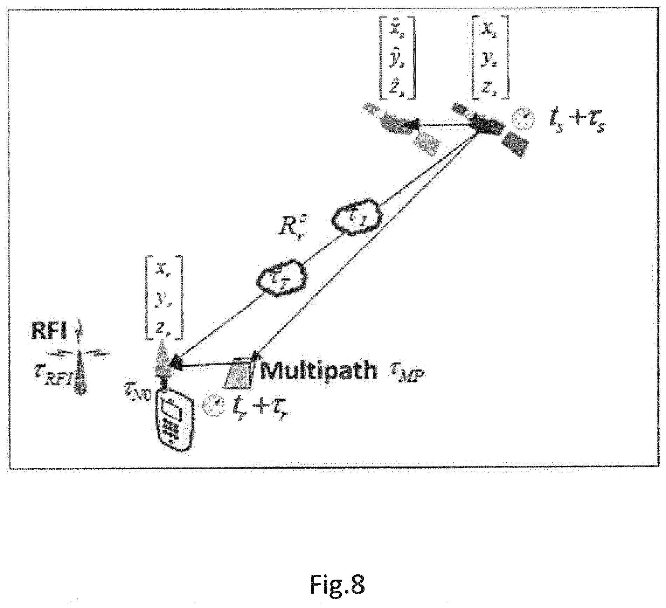

More details and aspects are mentioned in connection with the embodiments described above or below. The embodiment shown in Fig. 7 may comprise one or more optional additional features corresponding to one or more aspects mentioned in connection with the proposed concept or one or more embodiments described above (e.g. Fig. 1 - 6) or below (e.g. Fig. 8).

Figure 8 schematically illustrates different contributions on to the pseudo ranges for one line of sight (LOS). Figure 8 depicts the geometrical positions of a satellite transmitting the positioning signal and a receiver (user device). Additionally, the different contributions impacting the pseudo-ranges used in the position estimation equation are also represented. This includes:

- $R_r^s$ which represents the true ("Physical") distance between the transmitting satellite and the receiver;
- $t_s$ which represents the time of transmission, expressed in the "local satellite time referential" including satellite clock drift;
- $t_r$ which represents the time of reception, expressed in the "local receiver time referential" including user clock drift;
- $\tau_s$ which represents the satellite clock drift evaluated at time of transmission;
- $\tau_r$ which represents the receiver clock drift evaluated at time of reception;
- $\tau_I$ which represents the contribution of the Ionosphere onto the propagation delay;
- $\tau_T$ which represents the contribution of the Troposphere onto the propagation delay;
- $\tau_{MP}$ which represents the contribution of the local Multipath onto the estimation of the propagation delay;
- $\tau_{RFI}$ which represents the contribution of the local Radio Frequency Interferences (RFI) onto the estimation of the propagation delay;
- $\tau_{N0}$ which represents the contribution of the thermal noise onto the estimation of the propagation delay;
- $[x_r\, y_r\, z_r]^T$ which represent the coordinate vector of the receiver to be estimated;

- $[x_s \; y_s \; z_s]^T$ which represent the coordinate vector of the true satellite position; and
- $[\hat{x}_s \; \hat{y}_s \; \hat{z}_s]^T$ which represents the coordinate vector of the estimated satellite position and which is usually computed (estimated) by the navigation system and encoded onto the navigation signal. Alternatively, the estimated satellite position can also be computed by another navigation service operator and made available to the user device via another mean, such as the internet.

Assuming "ideal" satellite and receiver clock (free of drift), the distance between satellite and receiver is given by the following equation, where $c_0$ represents the speed of light:

$$R_r^s = c_0 \cdot (t_r - t_s) \qquad \text{(eq. 1)}$$

Due to the clock offsets at satellite and receiver sides, the Pseudo-Range (PR) expression, without any additional perturbing contributions, can be derived from the former equation as:

$$PR_r^s = c_0 \cdot ((t_r + \tau_r) - (t_s + \tau_s)) = R_r^s + c_0 \cdot (\tau_r - \tau_s) \qquad \text{(eq. 2)}$$

Now the true satellite to receiver distance can also be expressed as

$$R_r^s = \sqrt{(x_s - x_r)^2 + (y_s - y_r)^2 + (z_s - z_r)^2} \qquad \text{(eq. 3)}$$

(eq. 2) can be rewritten as follow, when accounting all other contribution to the Pseudo-Range measurement:

$$PR_r^s = \sqrt{(x_s - x_r)^2 + (y_s - y_r)^2 + (z_s - z_r)^2} + c_0 \cdot (\tau_r - \tau_s) + \tau_I + \tau_T + \tau_{RFI} + \tau_{MP} + \tau_{N0} \qquad \text{(eq. 4)}$$

In the former equation, 4 unknowns have to be estimated at receiver side: the 3 user receiver coordinates and the receiver clock offset. For point positioning, it is usual to linearize the former equation around a coarse estimate of the user position, $[\tilde{x}_{0,r} \; \tilde{y}_{0,r} \; \tilde{z}_{0,r}]$, yielding:

$$PR_r^s \approx R_{0,r}^s + \frac{(x_s - \tilde{x}_{0,r})}{R_{0,r}^s} \cdot \Delta x_r + \frac{(y_s - \tilde{y}_{0,r})}{R_{0,r}^s} \cdot \Delta y_r + \frac{(z_s - \tilde{z}_{0,r})}{R_{0,r}^s} \cdot \Delta z_r + c_0 \cdot (\tau_r - \tau_s) + \tau_I^s + \tau_T^s + \tau_{RFI} + \tau_{MP} + \tau_{N0}$$

$$\text{(eq. 5)}$$

In the former equation, the estimation increments relative to the coarse estimated position are given by $\Delta x = \tilde{x}_r - \tilde{x}_{0,r}$, $\Delta y = \tilde{y}_r - \tilde{y}_{0,r}$ and $\Delta z = \tilde{z}_r - \tilde{z}_{0,r}$.

The coarse distance between the true satellite position and the coarse receiver position can be expressed similarly with the predicted satellite position provided for example in the navigation user message, using again linearization technique. Indeed, the receiver ignores the exact satellite position.

$$R_{0,r}^s = \sqrt{(x_s - \tilde{x}_{0,r})^2 + (y_s - \tilde{y}_{0,r})^2 + (z_s - \tilde{z}_{0,r})^2}$$

$$= \hat{R}_{0,r}^s + \frac{(\hat{x}_s - \tilde{x}_{0,r})}{\hat{R}_{0,r}^s} \cdot (\hat{x}_s - x_s) + \frac{(\hat{y}_s - \tilde{y}_{0,r})}{\hat{R}_{0,r}^s} \cdot (\hat{y}_s - y_s) + \frac{(\hat{z}_s - \tilde{z}_{0,r})}{\hat{R}_{0,r}^s} \cdot (\hat{z}_s - z_s)$$

$$= \hat{R}_{0,r}^s + \delta\hat{R}_{0,r}^{orb,s} \qquad\qquad \text{(eq. 6)}$$

with $\hat{R}_{0,r}^s = \sqrt{(\hat{x}_s - \tilde{x}_{0,r})^2 + (\hat{y}_s - \tilde{y}_{0,r})^2 + (\hat{z}_s - \tilde{z}_{0,r})^2}$ and

$$\delta\hat{R}_{0,r}^{orb,s} = \frac{1}{\hat{R}_{0,r}^s}\left[(\hat{x}_s - \tilde{x}_{0,r}) \cdot (\hat{x}_s - x_s) + (\hat{y}_s - \tilde{y}_{0,r}) \cdot (\hat{y}_s - y_s) + (\hat{z}_s - \tilde{z}_{0,r}) \cdot (\hat{z}_s - z_s)\right]$$

In the former equation, $\delta\hat{R}_{0,r}^{orb,s}$ represents the inner product between the satellite position prediction error and the normalized satellite-to-coarse-user receiver position.

Because the satellite altitude is much larger than the distance between the true and the coarse receiver position, this quantity can also be approximated to the inner product between the satellite position prediction error and the normalized satellite-to-true-user receiver position.

$$\delta\hat{R}_{0,r}^{orb,s} = \delta\hat{R}_r^{orb,s} \approx \frac{1}{\hat{R}_r^s}\left[(\hat{x}_s - x_r) \cdot (\hat{x}_s - x_s) + (\hat{y}_s - y_r) \cdot (\hat{y}_s - y_s) + (\hat{z}_s - z_r) \cdot (\hat{z}_s - z_s)\right] \qquad \text{(eq. 7)}$$

This quantity can be considered as a constant for receiver positions lying near the true receiver positions:

$$\frac{1}{\hat{R}_{r1}^s}\left[(x^s - x_{r1}) \cdot (\hat{x}^s - x^s), (y^s - y_{r1}) \cdot (\hat{y}^s - y^s), (z^s - z_{r1}) \cdot (\hat{z}^s - z^s)\right]$$

$$\approx \frac{1}{\hat{R}_{r2}^s}\left[(x^s - x_{r2}) \cdot (\hat{x}^s - x^s), (y^s - y_{r2}) \cdot (\hat{y}^s - y^s), (z^s - z_{r2}) \cdot (\hat{z}^s - z^s)\right] \qquad \text{(eq. 8)}$$

if

$$\left[(x_{r2} - x_{r1}) \cdot (x_{r2} - x_{r1}) + (x_{r2} - x_{r1}) \cdot (x_{r2} - x_{r1}) + (x_{r2} - x_{r1}) \cdot (x_{r2} - x_{r1})\right]$$

$$<< \left[(x^s - x_{r1}) \cdot (x^s - x_{r1}) + (y^s - y_{r1}) \cdot (y^s - y_{r1}) + (z^s - z_{r1}) \cdot (z^s - z_{r1})\right]$$

Based on these considerations the Pseudo-Range equation between one receiver and satellite Line-of-Sight (LOS) is given by:

$$PR_r^s \approx \hat{R}_{0,r}^s + \delta\hat{R}_{0,r}^{orb,s} - \frac{(x_s - \tilde{x}_{0,r})}{R_{0,r}^s} \cdot \Delta x_r - \frac{(y_s - \tilde{y}_{0,r})}{R_{0,r}^s} \cdot \Delta y_r - \frac{(z_s - \tilde{z}_{0,r})}{R_{0,r}^s} \cdot \Delta z_r + c_0 \cdot (\tau_r - \tau_s) + \tau_I^s + \tau_T^s + \tau_{RFI} + \tau_{MP} + \tau_{N0}$$

$$\text{(eq. 9)}$$

A clock prediction model, $\hat{\tau}_s$, for the satellite clock drift, $\tau_s$ is also provided in the user message in order to help the user correcting (ideally suppressing) the corresponding clock drift. Finally, additional correction models for the atmospherical effects, for the ionosphere $\hat{\tau}_I$ and $\hat{\tau}_T$ atmosphere are applied by the user device to further reduce the pseudo-range error:

$$PR_r^s \approx \hat{R}_{0,r}^s + \delta\hat{R}_{0,r}^{orb,s} - \frac{(x_s - \tilde{x}_{0,r})}{R_{0,r}^s} \cdot \Delta x_r - \frac{(y_s - \tilde{y}_{0,r})}{R_{0,r}^s} \cdot \Delta y_r - \frac{(z_s - \tilde{z}_{0,r})}{R_{0,r}^s} \cdot \Delta z_r \cdots$$
$$+ c_0 \cdot (\tau_r - (\tau_s - \hat{\tau}_s)) + (\tau_I^s - \hat{\tau}_I^s) + (\tau_T^s - \hat{\tau}_T^s) + \tau_{RFI} + \tau_{MP} + \tau_{N0}$$

$$PR_r^s \approx \hat{R}_{0,r}^s + \delta\hat{R}_{0,r}^{orb,s} - \frac{(x_s - \tilde{x}_{0,r})}{R_{0,r}^s} \cdot \Delta x_r - \frac{(y_s - \tilde{y}_{0,r})}{R_{0,r}^s} \cdot \Delta y_r - \frac{(z_s - \tilde{z}_{0,r})}{R_{0,r}^s} \cdot \Delta z_r + c_0 \cdot (\tau_r - \delta\hat{\tau}_s) + \delta\hat{\tau}_I^s + \delta\hat{\tau}_T^s + \tau_{RFI} + \tau_{MP} + \tau_{N0}$$

$$\text{(eq. 10)}$$

In the former equation, $\hat{\delta\tau}_s = (\tau_s - \hat{\tau}_s)$ represents the satellite clock prediction error, $\delta\hat{\tau}_I^s = (\tau_I^s - \hat{\tau}_I^s)$ represents the ionosphere prediction error, and $\delta\hat{\tau}_T^s = (\tau_T^s - \hat{\tau}_T^s)$ represents the troposphere prediction error.

It is important to highlight that in the frame of proposed invention the different prediction errors ($\hat{\delta\tau}_s = (\tau_s - \hat{\tau}_s)$, $\delta\hat{\tau}_I^s = (\tau_I^s - \hat{\tau}_I^s)$, $\delta\hat{\tau}_T^s = (\tau_T^s - \hat{\tau}_T^s)$ and $\delta\hat{R}_{0,r}^{orb,s}$) will be timedepend and shall increase with time.

It is to be noted that in this model, the user device does not apply correction model to correct multipath, or interferences effects, which does not close the possibility.

Finally, the residual of the clock prediction error, $c_0 \cdot \hat{\delta\tau}_s$, can be merged with the residual for the orbit prediction error, $\delta\hat{R}_{0,r}^s$, for each LOS, yielding $\delta\hat{R}_{0,r}^s = \delta\hat{R}_{0,r}^{orb,s} - c_0 \cdot \delta\hat{\tau}_s$. The former equation becomes then:

$$PR_r^s \approx \hat{R}_{0,r}^s - \frac{(x_s - \tilde{x}_{0,r})}{R_{0,r}^s} \cdot \Delta x_r - \frac{(y_s - \tilde{y}_{0,r})}{R_{0,r}^s} \cdot \Delta y_r - \frac{(z_s - \tilde{z}_{0,r})}{R_{0,r}^s} \cdot \Delta z_r + c_0 \cdot \tau_r + \delta\hat{R}_{0,r}^s + \delta\hat{\tau}_I^s + \delta\hat{\tau}_T^s + \tau_{RFI} + \tau_{MP} + \tau_{N0}$$

$$\text{(eq. 11)}$$

The determination of the four receiver unknowns necessitates 4 LoS bringing each one linearized PR equation. After rearranging some of the terms this yields the following set of equations.

$$\Delta PR_r^{s1} = \hat{R}_{0,r}^{s1} - PR_r^{s1} \approx \frac{(x_{s1} - \tilde{x}_{0,r})}{R_{0,r}^{s1}} \cdot \Delta x_r + \frac{(y_{s1} - \tilde{y}_{0,r})}{R_{0,r}^{s1}} \cdot \Delta y_r + \frac{(z_{s1} - \tilde{z}_{0,r})}{R_{0,r}^{s1}} \cdot \Delta z_r - c_0 \cdot (\tau_r - \delta\hat{\tau}_{s1}) + \delta\hat{R}_{0,r}^s + \delta\hat{\tau}_I^{s1} + \delta\hat{\tau}_I^{s1} + \tau_{RFI} + \tau_{MP} + \tau_{N0}$$

$$\Delta PR_r^{s2} = \hat{R}_{0,r}^{s2} - PR_r^{s2} \approx \frac{(x_{s2} - \tilde{x}_{0,r})}{R_{0,r}^{s2}} \cdot \Delta x_r + \frac{(y_{s2} - \tilde{y}_{0,r})}{R_{0,r}^{s2}} \cdot \Delta y_r + \frac{(z_{s2} - \tilde{z}_{0,r})}{R_{0,r}^{s2}} \cdot \Delta z_r - c_0 \cdot (\tau_r - \delta\hat{\tau}_{s2}) + \delta\hat{R}_{0,r}^s + \delta\hat{\tau}_I^{s2} + \delta\hat{\tau}_I^{s2} + \tau_{RFI} + \tau_{MP} + \tau_{N0}$$

$$\Delta PR_r^{s3} = \hat{R}_{0,r}^{s3} - PR_r^{s3} \approx \frac{(x_{s3} - \tilde{x}_{0,r})}{R_{0,r}^{s3}} \cdot \Delta x_r + \frac{(y_{s3} - \tilde{y}_{0,r})}{R_{0,r}^{s3}} \cdot \Delta y_r + \frac{(z_{s3} - \tilde{z}_{0,r})}{R_{0,r}^{s3}} \cdot \Delta z_r - c_0 \cdot (\tau_r - \delta\hat{\tau}_{s3}) + \delta\hat{R}_{0,r}^s + \delta\hat{\tau}_I^{s3} + \delta\hat{\tau}_I^{s3} + \tau_{RFI} + \tau_{MP} + \tau_{N0}$$

$$\Delta PR_r^{s4} = \hat{R}_{0,r}^{s4} - PR_r^{s4} \approx \frac{(x_{s4} - \tilde{x}_{0,r})}{R_{0,r}^{s4}} \cdot \Delta x_r + \frac{(y_{s4} - \tilde{y}_{0,r})}{R_{0,r}^{s4}} \cdot \Delta y_r + \frac{(z_{s4} - \tilde{z}_{0,r})}{R_{0,r}^{s4}} \cdot \Delta z_r - c_0 \cdot (\tau_r - \delta\hat{\tau}_{s4}) + \delta\hat{R}_{0,r}^s + \delta\hat{\tau}_I^{s4} + \delta\hat{\tau}_I^{s4} + \tau_{RFI} + \tau_{MP} + \tau_{N0}$$

$$\text{(eq. 12)}$$

This one can itself be synthetized as follows

$$\Delta PR_r^{s1} = \hat{R}_{0,r}^{s1} - PR_r^{s1} \approx \frac{(x_{s1} - \tilde{x}_{0,r})}{R_{0,r}^{s1}} \cdot \Delta x_r + \frac{(y_{s1} - \tilde{y}_{0,r})}{R_{0,r}^{s1}} \cdot \Delta y_r + \frac{(z_{s1} - \tilde{z}_{0,r})}{R_{0,r}^{s1}} \cdot \Delta z_r - c_0 \cdot (\tau_r - \delta\hat{\tau}_{s1}) + \varepsilon_r^{s1}$$

$$\Delta PR_r^{s2} = \hat{R}_{0,r}^{s2} - PR_r^{s2} \approx \frac{(x_{s2} - \tilde{x}_{0,r})}{R_{0,r}^{s2}} \cdot \Delta x_r + \frac{(y_{s2} - \tilde{y}_{0,r})}{R_{0,r}^{s2}} \cdot \Delta y_r + \frac{(z_{s2} - \tilde{z}_{0,r})}{R_{0,r}^{s2}} \cdot \Delta z_r - c_0 \cdot (\tau_r - \delta\hat{\tau}_{s2}) + \varepsilon_r^{s2}$$

$$\Delta PR_r^{s3} = \hat{R}_{0,r}^{s3} - PR_r^{s3} \approx \frac{(x_{s3} - \tilde{x}_{0,r})}{R_{0,r}^{s3}} \cdot \Delta x_r + \frac{(y_{s3} - \tilde{y}_{0,r})}{R_{0,r}^{s3}} \cdot \Delta y_r + \frac{(z_{s3} - \tilde{z}_{0,r})}{R_{0,r}^{s3}} \cdot \Delta z_r - c_0 \cdot (\tau_r - \delta\hat{\tau}_{s3}) + \varepsilon_r^{s3}$$

$$\Delta PR_r^{s4} = \hat{R}_{0,r}^{s4} - PR_r^{s4} \approx \frac{(x_{s4} - \tilde{x}_{0,r})}{R_{0,r}^{s4}} \cdot \Delta x_r + \frac{(y_{s4} - \tilde{y}_{0,r})}{R_{0,r}^{s4}} \cdot \Delta y_r + \frac{(z_{s4} - \tilde{z}_{0,r})}{R_{0,r}^{s4}} \cdot \Delta z_r - c_0 \cdot (\tau_r - \delta\hat{\tau}_{s4}) + \varepsilon_r^{s4}$$

(eq. 13)

Where all contributions errors applicable to each satellite of index s, into a single term $\varepsilon_r^s = -(\delta\hat{R}_{0,r}^s + \delta\hat{\tau}_I^s + \delta\hat{\tau}_I^s + \tau_{RFI}^s + \tau_{MP}^s + \tau_{N0}^s)$ , enables to synthetize the former set of equations as follows-

$$\Delta PR = H \cdot \Delta X + E \qquad \text{(eq. 14)}$$

$$\Delta PR = \begin{bmatrix} \frac{(x^{s1} - \tilde{x}_{0,r})}{PR_{0,r}^{s1}} & \frac{(y^{s1} - \tilde{y}_{0,r})}{R_{0,r}^{s1}} & \frac{(z^{s1} - \tilde{z}_{0,r})}{R_{0,r}^{s1}} & -c_0 \\ \frac{(x^{s2} - \tilde{x}_{0,r})}{R_{0,r}^{s2}} & \frac{(y^{s2} - \tilde{y}_{0,r})}{R_{0,r}^{s2}} & \frac{(z^{s2} - \tilde{z}_{0,r})}{R_{0,r}^{s2}} & -c_0 \\ \frac{(x^{s3} - \tilde{x}_{0,r})}{R_{0,r}^{s3}} & \frac{(y^{s3} - \tilde{y}_{0,r})}{R_{0,r}^{s3}} & \frac{(z^{s3} - \tilde{z}_{0,r})}{R_{0,r}^{s3}} & -c_0 \\ \frac{(x^{s4} - \tilde{x}_{0,r})}{R_{0,r}^{s4}} & \frac{(y^{s4} - \tilde{y}_{0,r})}{R_{0,r}^{s4}} & \frac{(z^{s4} - \tilde{z}_{0,r})}{R_{0,r}^{s4}} & -c_0 \end{bmatrix}$$

$$\Delta X = [\Delta x_r, \Delta y_r, \Delta z_r, \tau_r]^T$$

$$\Delta PR = [\Delta PR_r^{s1}, \Delta PR_r^{s2}, \Delta PR_r^{s3}, \Delta PR_r^{s4}]^T$$

$$E = [\varepsilon_r^{s1}, \varepsilon_r^{s2}, \varepsilon_r^{s3}, \varepsilon_r^{s4}]^T$$

The application of the weighted least square method to the former system of equations yields the following solution for $\Delta\tilde{X}$:

$$\Delta\tilde{X} = [H \cdot W^{-1} \cdot H^T]^{-1} \cdot H^T \cdot W^{-1} \cdot \Delta PR \qquad \text{(eq. 15}$$

Where the weighting matrix equals

$$W = E\left[\begin{pmatrix}\varepsilon_r^{s1}\\ \vdots\end{pmatrix}\begin{pmatrix}\varepsilon_r^{s1}\\ \vdots\end{pmatrix}^T\right] \qquad \text{(eq. 16}$$

And can be also expressed as

$$W = \begin{bmatrix}\sigma^2(s_1,t_{PVT}) & 0 & 0 & 0 \\ 0 & \sigma^2(s_2,t_{PVT}) & 0 & 0 \\ 0 & 0 & \sigma^2(s_n,t_{PVT}) & 0 \\ 0 & 0 & 0 & \sigma^2(s_N,t_{PVT})\end{bmatrix}\quad 0 \qquad \text{(eq. 17}$$

Where each term onto the diagonal represents the contribution from the orbit and clock ( $\sigma^2_{ODTS}(i,t_{PVT})$ ),

Atmosphere $\sigma^2_{Atmo}(i,t_{PVT})$ and local effects ( $\sigma^2_{Loc}(i,t_{PVT})$ ) onto the corrected pseudo-range:

$$\sigma^2(i,t_{PVT}) = \sigma^2_{ODTS}(i,t_{PVT}) + \sigma^2_{Atmo}(i,t_{PVT}) + \sigma^2_{Loc}(i,t_{PVT}) \qquad \text{(eq. 18}$$

More details and aspects are mentioned in connection with the embodiments described above or below. The embodiment shown in Fig. 8 may comprise one or more optional additional features corresponding to one or more aspects mentioned in connection with the proposed concept or one or more embodiments described above (e.g. Fig. 1 - 7) or below.

According to an aspect, a "dynamic SISA" may provide a time dependent SQI for position accuracy.

In one or more embodiments, RNSS/GNSS receiver can adapt the refresh/read rate of the navigation message to their own accuracy needs thanks to the dynamic SQI. During the time period when messages are ignored, the receiver processing can be reduced to ranging measurements only and the power consumption is reduced. Thus, the battery drain (major concern for smartphones) may be slowed down.

In one or more embodiments, even if this disclosure is directed to application in the frame of GNSS/RNSS context, this may also be applied for any other Position, Navigation and Timing (PNT) systems using pseudo-range to help a user device determining its position, and transmitting prediction models used to correct some contributions of the pseudo-ranges. Hence, one or more embodiments may be extended to PNT systems using Signal of Opportunities such as the ones transmitted by terrestrial communication networks (e.g. 3G, 4G, 5G, WIFI).

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The present disclosure is not limited in any way to the embodiments described above. On the contrary, there are many possibilities for modifications thereof, which are apparent to an average skilled person without departing from the underlying idea of the present disclosure as defined in the appended claims.

**Claims**

1. A user device, UD, (100) for performing ranging measurements, the user device comprising:

   a receiving unit (120) adapted to receive a plurality of signals from a plurality of navigation satellites, wherein each of the plurality of signals comprises a first navigation message during a first validity period and at least one second navigation message during a second validity period;
   a processing unit (110) adapted to process the first navigation message in the first validity period and adapted to perform ranging measurements in the second validity period based on the plurality of signals received during the second validity period and the first navigation message processed in the first validity period, and wherein the second validity period follows the first validity period,
   wherein the first navigation message comprises a time dynamic signal quality indicator, SQI, wherein the processing unit (110) is adapted to determine a dimension of the second validity period based on the time dynamic SQI and a predetermined ranging accuracy of the UD,
   wherein the time dynamic SQI is an indicator for overbounding a ranging error, and wherein the time dynamic SQI being valid for the first validity period is different from the time dynamic SQI being valid for the second validity period.

2. A UD (100) according to claim 1, wherein the navigation satellites are part of a global navigation satellite system, GNSS, or radio navigation satellite system.

3. A UD (100) according to claim 1, wherein the time dynamic SQI being valid for the first validity period is used for performing ranging measurements during the second validity period.

4. A UD (100) according to any one of claims 1 or 3, wherein the processing unit (110) is adapted to determine the dimension of the second validity period by setting a maximum ranging error.

5. A UD (100) according to any one of the foregoing claims, wherein the processing unit (110) is adapted to ignore the at least one navigation message during the second validity period.

6. A UD (100) according to any one of the foregoing claims, wherein the second validity period is an extended validity time of the first validity period.

7. A UD (100) according to any one of the foregoing claims, wherein the processing unit (110) is adapted to process the navigation message in the first validity period only.

8. A UD (100) according to any one of the foregoing claims, wherein a first part of the processing unit (110) is adapted to process the navigation message, wherein a second part of the processing unit (110) is adapted to perform the ranging measurements, and wherein the first and second parts of the processing unit (110) work self-sufficient.

9. A UD (100) according to claim 8, wherein the first part of the processing unit (110) is not in use while the ranging measurement is performed by the second part of the processing unit (110).

10. A method for performing ranging measurements performed in a user device, UD, (100) the method comprising:

    receiving, by a receiving unit (120) of the UD, a plurality of signals from a plurality of navigation satellites, wherein each of the plurality of signals comprises a first navigation message during a first validity period and a second navigation message during a second validity period;
    processing, by a processing unit (110), the navigation message in the first validity period; and performing, by the processing unit (110), ranging measurements in the second validity period based on the plurality of signals received during the second validity period and the first navigation message processed in the first validity period, and wherein the second validity period follows the first validity period,

wherein the first navigation message comprises a time dynamic signal quality indicator, SQI, wherein the processing unit (110) is adapted to determine a dimension of the second validity period based on the time dynamic SQI and a predetermined ranging accuracy of the UD,

wherein the time dynamic SQI is an indicator for overbounding a ranging error, and wherein the time dynamic SQI being valid for the first validity period is different from the time dynamic SQI being valid for the second validity period.

11. A method according to claim 10, wherein the first validity period is smaller than 1 hour, and the second validity period smaller than 2 hours.

**Patentansprüche**

1. Benutzergerät, UD, (100) zur Durchführung von Entfernungsmessungen, wobei das Benutzergerät umfasst:

eine Empfangseinheit (120), die ausgebildet ist, eine Vielzahl von Signalen von einer Vielzahl von Navigationssatelliten zu empfangen, wobei jedes der Vielzahl von Signalen eine erste Navigationsnachricht während einer ersten Gültigkeitsdauer und mindestens eine zweite Navigationsnachricht während einer zweiten Gültigkeitsdauer umfasst;

eine Verarbeitungseinheit (110), die ausgebildet ist, die erste Navigationsnachricht in der ersten Gültigkeitsdauer zu verarbeiten, und die ausgebildet ist, um Entfernungsmessungen in der zweiten Gültigkeitsdauer basierend auf der Vielzahl von Signalen, die während der zweiten Gültigkeitsdauer empfangen wurden, und der ersten Navigationsnachricht, die in der ersten Gültigkeitsdauer verarbeitet wurde, durchzuführen, und wobei die zweite Gültigkeitsdauer der ersten Gültigkeitsdauer folgt,

wobei die erste Navigationsnachricht einen zeitdynamischen Signalqualitätsindikator, SQI, umfasst, wobei die Verarbeitungseinheit (110) ausgebildet ist, eine Dimension der zweiten Gültigkeitsdauer basierend auf dem zeitdynamischen SQI und einer vorbestimmten Entfernungsgenauigkeit des UD zu bestimmen,

wobei der zeitdynamische SQI ein Indikator zur Überschreitung eines Entfernungsfehlers ist, und wobei der zeitdynamische SQI, der für die erste Gültigkeitsdauer gültig ist, sich von dem zeitdynamischen SQI, der für die zweite Gültigkeitsdauer gültig ist, unterscheidet.

2. UD (100) nach Anspruch 1, wobei die Navigationssatelliten Teil eines globalen Navigationssatellitensystems, GNSS, oder eines Funknavigationssatellitensystems sind.

3. UD (100) nach Anspruch 1, wobei der zeitdynamische SQI, die für die erste Gültigkeitsdauer gültig ist, zur Durchführung von Entfernungsmessungen während der zweiten Gültigkeitsdauer verwendet wird.

4. UD (100) nach einem der Ansprüche 1 oder 3, wobei die Verarbeitungseinheit (110) dazu eingerichtet ist, die Größe der zweiten Gültigkeitsdauer durch Einstellen eines maximalen Entfernungsfehlers zu bestimmen.

5. UD (100) nach einem der vorangehenden Ansprüche, wobei die Verarbeitungseinheit (110) dazu eingerichtet ist, die mindestens eine Navigationsnachricht während der zweiten Gültigkeitsdauer zu ignorieren.

6. UD (100) nach einem der vorangehenden Ansprüche, wobei die zweite Gültigkeitsdauer eine erweiterte Gültigkeitsdauer der ersten Gültigkeitsdauer ist.

7. UD (100) nach einem der vorangehenden Ansprüche, wobei die Verarbeitungseinheit (110) so ausgebildet ist, die Navigationsnachricht nur in der ersten Gültigkeitsdauer zu verarbeiten.

8. UD (100) nach einem der vorangehenden Ansprüche, wobei ein erster Teil der Verarbeitungseinheit (110) dazu ausgebildet ist, die Navigationsnachricht zu verarbeiten, wobei ein zweiter Teil der Verarbeitungseinheit (110) dazu ausgebildet ist, die Entfernungsmessungen durchzuführen, und wobei der erste und der zweite Teil der Verarbeitungseinheit (110) autark arbeiten.

9. UD (100) nach Anspruch 8, wobei der erste Teil der Verarbeitungseinheit (110) nicht in Gebrauch ist, während die Entfernungsmessung durch den zweiten Teil der Verarbeitungseinheit (110) durchgeführt wird.

10. Verfahren zur Durchführung von Entfernungsmessungen, die in einem Benutzergerät, UD, (100) durchgeführt werden, wobei das Verfahren umfasst:

Empfangen einer Vielzahl von Signalen von einer Vielzahl von Navigationssatelliten durch eine Empfangseinheit (120) des UD, wobei jedes der Vielzahl von Signalen eine erste Navigationsnachricht während einer ersten Gültigkeitsdauer und eine zweite Navigationsnachricht während einer zweiten Gültigkeitsdauer umfasst;
Verarbeiten der Navigationsnachricht in der ersten Gültigkeitsdauer durch eine Verarbeitungseinheit (110); und Durchführen von Entfernungsmessungen in der zweiten Gültigkeitsdauer durch die Verarbeitungseinheit (110), basierend auf der Vielzahl von Signalen, die während der zweiten Gültigkeitsdauer empfangen wurden, und der ersten Navigationsnachricht, die in der ersten Gültigkeitsdauer verarbeitet wurde, und wobei die zweite Gültigkeitsdauer auf die erste Gültigkeitsdauer folgt,
wobei die erste Navigationsnachricht einen zeitdynamischen Signalqualitätsindikator, SQI, umfasst, wobei die Verarbeitungseinheit (110) ausgebildet ist, eine Dimension der zweiten Gültigkeitsdauer basierend auf dem zeitdynamischen SQI und einer vorbestimmten Entfernungsgenauigkeit des UD zu bestimmen,
wobei der zeitdynamische SQI ein Indikator zur Überschreitung eines Entfernungsfehlers ist, und wobei der zeitdynamische SQI, der für die erste Gültigkeitsdauer gültig ist, sich von dem zeitdynamischen SQI, der für die zweite Gültigkeitsdauer gültig ist, unterscheidet.

11. Verfahren nach Anspruch 10, wobei die erste Gültigkeitsdauer kleiner als 1 Stunde und die zweite Gültigkeitsdauer kleiner als 2 Stunden ist.

**Revendications**

1. Dispositif d'utilisateur, UD, (100) destiné à effectuer des mesures de distance, le dispositif d'utilisateur comprenant :

une unité de réception (120) conçue pour recevoir une pluralité de signaux provenant d'une pluralité de satellites de navigation, chaque signal de la pluralité de signaux comprenant un premier message de navigation pendant une première durée de validité et au moins un second message de navigation pendant une seconde période de validité ;
une unité de traitement (110) conçue pour traiter le premier message de navigation pendant une première durée de validité et conçue pour effectuer des mesures de distance dans la seconde période de validité sur la base de la pluralité des signaux reçus pendant la seconde période de validité et du premier message traité dans la première période de validité, et la seconde période de validité suivant la première période de validité,
le premier message de navigation comprenant un indicateur de qualité de signal temporel dynamique, SQI, l'unité de traitement (110) étant conçue pour déterminer une dimension de la seconde période de validité sur la base du SQI temporel dynamique et d'une précision de distance prédéfinie de l'UD,
le SQI dynamique temporel est un indicateur étant un indicateur de surbornage d'une erreur de distance, et le SQI dynamique temporel étant valide pour la première période de validité est différent du SQI dynamique temporel pour la seconde période de validité.

2. UD (100) selon la revendication 1, dans lequel les satellites de navigation font partie d'un système de géolocalisation et navigation par satellites, GNSS, ou d'un système radionavigation par satellite.

3. UD (100) selon la revendication 1, dans lequel le SQI temporel dynamique pour la première période de validité est utilisée pour effectuer des mesures de distance pendant la seconde période de validité.

4. UD (100) selon l'une quelconque des revendications 1 ou 3, dans lequel l'unité de traitement (110) est conçue pour déterminer la dimension de la seconde période de validité par définition d'une erreur de distance maximum.

5. UD (100) selon l'une quelconque des revendications précédentes, dans lequel l'unité de traitement (110) est conçue pour ignorer l'au moins un message de navigation pendant la seconde période de validité.

6. UD (100) selon l'une quelconque des revendications précédentes, dans lequel la seconde période de validité est un temps de validité étendue de la première période de validité.

7. UD (100) selon l'une quelconque des revendications précédentes, dans lequel l'unité de traitement (110) est conçue pour traiter le message de navigation dans la première période de validité uniquement.

**8.** UD (100) selon l'une quelconque des revendications précédentes, dans lequel une première partie de l'unité de traitement (110) est conçue pour traiter le message de navigation, dans lequel une seconde partie de l'unité de traitement (110) est conçue pour effectuer les mesures de distance, et dans lequel les première et seconde parties de l'unité de traitement (110) fonctionnement de manière autosuffisante.

**9.** UD (100) selon la revendication 8, dans lequel la première partie de l'unité de traitement (110) n'est pas en cours d'utilisation pendant que la mesure de distance est effectuée par la seconde partie de l'unité de traitement (110).

**10.** Procédé destiné à effectuer des mesures de distance effectuées dans un dispositif d'utilisateur, UD, (100) le procédé consistant à :

recevoir, par une unité de réception (120) de l'UD, une pluralité de signaux provenant d'une pluralité de satellites de navigation, chaque signal de la pluralité de signaux comprenant un premier message de navigation pendant une première durée de validité et au moins un second message de navigation pendant une seconde période de validité ;
traiter, par une unité de traitement (110) le premier message de navigation pendant une première durée de validité et effectuer, par l'unité de traitement (110), des mesures de distance dans la seconde période de validité sur la base de la pluralité des signaux reçus pendant la seconde période de validité et du premier message traité dans la première période de validité, et la seconde période de validité suivant la première période de validité, le premier message de navigation comprenant un indicateur de qualité de signal temporel dynamique, SQI, l'unité de traitement (110) étant conçue pour déterminer une dimension de la seconde période de validité sur la base du SQI temporel dynamique et d'une précision de distance prédéfinie de l'UD, le SQI dynamique temporel est un indicateur étant un indicateur de surbornage d'une erreur de distance, et le SQI dynamique temporel étant valide pour la première période de validité est différent du SQI dynamique temporel pour la seconde période de validité.

**11.** Procédé selon la revendication 10, dans lequel la première période de validité est inférieure à 1 heure, et la seconde période validité est inférieure à 2 heures.

100

110    120

Fig.1

Fig.2

Fig.3

Fig.4

Fig.5

Fig.6

Fig.7

EP 3 499 270 B1

Fig.8

**EP 3 499 270 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3220165 A2